# EUROPÄISCHE PATENTSCHRIFT

(11) **EP 1 133 419 B1**
(45) Veröffentlichungstag und Bekanntmachung des Hinweises auf die Patenterteilung: **08.10.2003**
(21) Anmeldenummer: 99959226.4
(22) Anmeldetag: 02.11.1999
(51) Int. Cl.: B60R 21/32

(54) **Steuervorrichtung für ein Insassenschutzmittel und Verfahren zum Steuern eines Insassenschutzmittels**
Device and Method for Controlling a Protection System for the Passengers of a Vehicle
Dispositif et procédé de régulation d'un moyen de protection des occupants d'un véhicule

(30) Priorität: 23.11.1998 DE 19853983
(43) Veröffentlichungstag der Anmeldung: 19.09.2001
(73) Patentinhaber: SIEMENS AKTIENGESELLSCHAFT, 80333 München (DE)
(72) Erfinder: HERMANN, Stefan, D-93096 Köfering (DE); WAGNER, Ekkehart-Peter, D-93077 Bad Abbach (DE)
(86) Internationale Anmeldenummer: DE9903480
(87) Internationale Veröffentlichungsnummer: WO00030902

(56) Entgegenhaltungen:
- EP-A- 0 813 998
- DE-A- 19 748 311

## Beschreibung

Die Erfindung betrifft eine Steuervorrichtung für ein Insassenschutzmittel nach dem Oberbegriff von Patentanspruch 1 und ein Verfahren zum Steuern eines Insassenschutzmittels nach dem Oberbegriff von Verfarensanspruch 9 (siehe z.B. EP-A-0 813 998).

Eine bekannte Steuervorrichtung enthält eine Serienschaltung aus einer ersten steuerbaren Leistungsstufe, einem dem Insassenschutzmittel zugeordneten Zündelement und einer zweiten steuerbaren Leistungsstufe. Diese Serienschaltung ist mit einer Energiequelle verbunden. Werden beide Leistungsstufen leitend geschaltet, so wird dem Zündelement Energie aus der Energiequelle zugeführt. Das als Heizwiderstand ausgebildete Zündelement wird infolge des Stromflusses erwärmt und führt im zugeordneten Gasgenerator zu einer Gasfreisetzung. Das freigesetzte Gas strömt beispielsweise in einen Airbag. Es können jedoch auch andere Insassenschutzmittel wie Gurtstraffer oder Überrollbügel auf ähnliche Art betrieben werden.

Oft werden mehrere derartige Zündkreise parallel zueinander angeordnet, wobei insbesondere die Leistungsstufen auf einem gemeinsamen Schaltungsträger als ASIC integriert werden. Vorzugsweise werden alle Zündkreise aus einer gemeinsamen Energiequelle gespeist. Die Energiequelle kann die Fahrzeugbatterie sein oder ein Zündkondensator, der Energie freigibt für den Fall, daß die Fahrzeugbatterie bei einem Unfall zu Schaden gekommen sein sollte. Der Zündkondensator ist dabei derart bemessen, daß er ausreichend Energie zum Zünden aller Zündelemente trägt. Die Zündelemente unterschiedlicher Zündkreise können unabhängig voneinander auch zu unterschiedlichen Zeitpunkten gezündet werden.

Da ein Zündelement beim Zünden jedoch kurzgeschlossen werden kann, würde im folgenden eine große Menge an Energie aus dem Zündkondensator über diesen Kurzschluß abfließen. Für nachfolgend zu zündende Zündelemente würde der Zündkondensator nicht mehr ausreichend Energie bereitstellen können. Deshalb wurde vorgeschlagen, den Strom im Zündkreis auf einen Maximalwert zu begrenzen, sodaß zumindest nicht die gesamte gespeicherte Zündenergie über den Kurzschluß abfließen kann. Dabei werden die Leistungsstufen derart angesteuert, daß sie nur einen begrenzten Stromfluß zulassen, wenn mittels eines Stromsensors ein Stromfluß größer als ein vorgegebener Wert erkannt wird.

Andererseits kann das Zündelement gegen das Potential der Energiequelle oder gegen das Massepotential kurzgeschlossen sein. Ein derartiger Leckschluß ruft im Aktivierungsfalle einen Stromabfluß über dieses Leck hervor, der im folgenden auch Leckstrom genannt wird. Dabei verringert sich auch der Widerstand im Zündkreis, da gewöhnlich eine der zwei mit dem Zündelement in Serie geschalteten Leistungsstufen überbrückt wird. An der anderen Leistungsstufe fällt dann, insbesondere bei strombegrenztem Zündkreisbetrieb eine hohe Spannung ab, die zu einer Erwärmung der Leistungsstufe und ihrer Umgebung führt. Diese Erwärmung wiederum kann sich über den gesamten Schaltungsträger der integrierten Schaltung ausbreiten und damit andere Bauelemente in ihrer Funktion beeinflussen. Infolge der Wärmeentwicklung können beipielsweise benachbarte Leistungsstufen für weitere Zündkreise in ihrer Funktion beeinträchtigt werden.

Aufgabe der Erfindung ist es deshalb, eine Steuervorrichtung und ein Verfahren anzugeben, die eine solche Beeinträchtigung der Steuervorrichtung abwenden.

Der die Vorrichtung betreffende Teil der Erfindungsaufgabe wird gelöst durch die Merkmale des Patentanspruchs 1. Der das Verfahren betreffende Teil der Erfindungsaufgabe wird gelöst durch die Merkmale des Patentanspruchs 10.

Bei der erfindungsgemäßen Lösung wird der Spannungsabfall an der Leistungsstufe aufgenommen und mit einem Grenzwert verglichen. Wird der Grenzwert überschritten, wird die Energiezufuhr zum Zündelement unterbrochen. Die Unterbrechung der Energiezufuhr wird dabei vorzugsweise durch einen Eingriff in die Ansteuerung der steuerbaren Leistungsstufe erwirkt: Die Leistungsstufe wird sperrend geschaltet.

Vorzugsweise wird die Leistungsstufe nach Ablauf insbesondere einer festgelegten Zeitspanne wieder zugeschaltet, sodaß eine erneute Stromzufuhr zum Zündelement erfolgt. Wird im folgenden festgestellt, daß wiederum die einen überproportionalen Energieverlust an den Leistungsstufen kennzeichnende Spannungsgröße den Grenzwert übersteigt, wird die Energiezufuhr abermals unterbrochen und nach der festgelegten Zeitspanne erneut fortgesetzt usf.. Nur wenn der Grenzwert nicht mehr erreicht wird, bleibt die Leistungsstufe dauerhaft leitend geschaltet und ermöglicht den dauerhaften Energiezufluß von der Energiequelle zum Zündelement.

Der Grenzwert ist vorzugsweise derart bemessen, daß er einen Spannungsabfall kennzeichnet, der nur dann erfolgen kann, wenn der Zündkreis einen außerordentlichen Stromabfluß - auch Leckfluß genannt - aufweist, hervorgerufen beispielsweise durch einen endlichen Widerstand zwischen dem Zündkreis und einem Pol der Energiequelle. Der Grenzwert kennzeichnet also eine Widerstandserniedrigung im Zündkreis gegenüber einem funktionstüchtigen Zündkreis, die einen erhöhten Spannungsabfall an der Leistungsstufe zur Folge hat. Eine Verringerung des Gesamtwiderstandes im Zündkreis äußert sich infolge der Strombegrenzung im Zündkreis in einem erhöhten Spannungsabfall an den verbleibenden Widerständen im Zündkreis und damit an der Leistungsstufe. Erfolgt bei einem Zündkreis ohne Leck eine Zündung und damit ein Stromfluß im Zündkreis, so wird der Grenzwert regelmäßig nicht erreicht, da weder der Stromfluß infolge der Zündung außergewöhnlich hoch ist, noch der Spannungsabfall an der Leistungsstufe infolge des Gesamtwiderstandswertes im Zündkreis.

Die Erfindung hat folgende Vorteile: Wird der kritische Grenzwert erreicht, der einen außerordentlich hohen Spannungsabfall an der Leistungsstufe im Zündkreis kennzeichnet, so wird durch das darauffolgende Abschalten der Leistungsstufe ihre Überhitzung verhindert und eine Beeinträchtigung der Funktionsfähigkeit weiterer auf demselben Träger angeordneter und weiteren Zündkreisen zugeordneter Leistungsstufen vermieden. Zudem wird eine Zerstörung der Leistungsstufe selbst vermieden. Werden weitere Strompulse nach dem erstmaligen Abschalten der Leistungsstufe erzeugt, so wird eine wesentlich geringere durchschnittliche Verlustleistung an den Leistungsstufen verloren als bei einem kontinuierlichen Durchschalten der Leistungsstufe. Zusammenfassend kann eine große Wärmeentwicklung in der Leistungsstufe und im Umfeld der Leistungsstufe vermieden werden und infolgedessen eine Zerstörung umliegender Bauelemente, die vorzugsweise noch zu zündenden Zündelementen zugeordnet sind, verhindert werden. Ein nachfolgendes Zünden von weiteren Zündelementen ist sichergestellt. Der Zündkondensator entlädt sich ferner wesentlich langsamer. Durch die reduzierte Verlustleistung an der Leistungsstufe kann diese in der integrierten Schaltung geringer dimensioniert werden und damit Fläche im ASIC eingespart werden.

Auch wenn eine Zündung des Zündelements selbst noch nicht erfolgt ist, kann mit Hilfe der Erfindung ein Zünden noch erfolgen. Ist beispielsweise ein Leckfluß im Stromkreis vorhanden und wird damit ein überproportionaler Strom beim Leitendschalten der Leistungsstufe aus der Energiequelle gezogen, so sollte das Zündelement dennoch mit zum Zünden ausreichender Energie beaufschlagt werden können. Durch die Strompulse werden ausreichend Energieportionen zum Zünden auf das Zündelement übertragen.

Vorteilhafte Weiterbildungen der Erfindung sind durch die Unteransprüche gekennzeichnet.

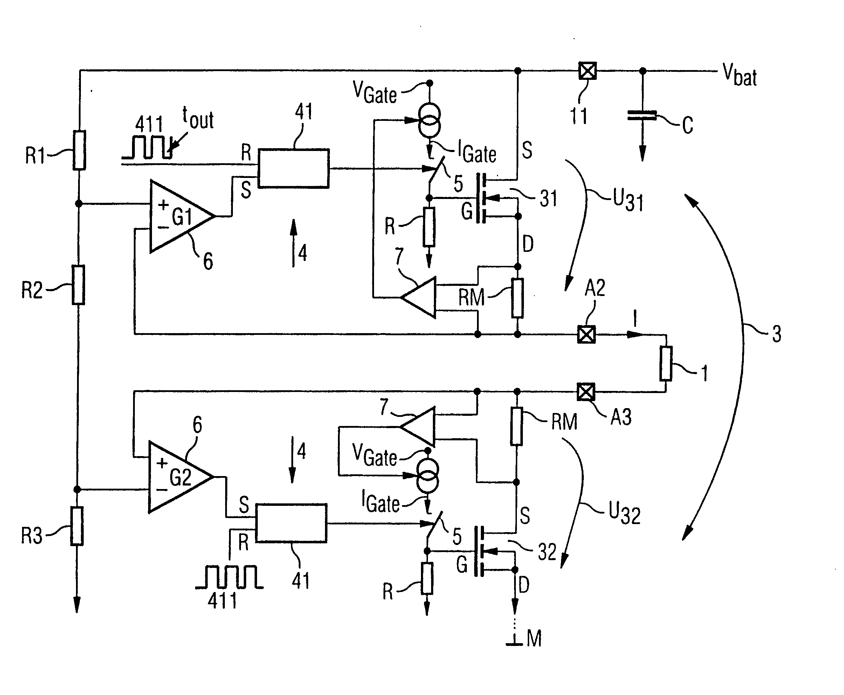

Die einzige Figur zeigt einen Stromlaufplan als Ausführungsbeispiel der Erfindung.

Eine Serienschaltung aus einer ersten steuerbaren Leistungsstufe 31, einem Meßwiderstand RM, einem Zündelement 1, einem zweiten Meßwiderstand RM und einer weiteren steuerbaren Leistungsstufe 32 ist mit den Polen U_{bat} und M einer Energiequelle 2 verbunden, die darüberhinaus einen Zündkondensator C enthält. Die Leistungsstufen 31 und 32 sind elektrisch steuerbare Schaltmittel 3, die als Feldeffekttransistoren mit den Anschlüssen Drain D, Source S und Gate/Steuerelektrode G ausgebildet sind. Sie können auch als sonstige steuerbare Schaltmittel 3 ausgebildet sein wie Bipolartransistoren, solange sie in der Lage sind, hohe Ströme zu schalten. Im normalen Fahrbetrieb ohne Aufprall sind die Leistungsstufen 31 und 32 sperrend geschaltet. Bei einem ausreichend starken Aufprall werden die Leistungsstufen 31 und 32 von einer nicht eingezeichneten Steuereinheit leitend geschaltet, sodaß die Enegiequelle 2 Energie zum Zünden des vorzugsweise als Heizwiderstand ausgebildeten Zündelements 1 liefert. Dabei wird die Energie von der Fahrzeugbatterie U_{bat},M geliefert, hilfsweise von dem Zündkondensator C.

Die Steuerung beider Leistungsstufen 31 und 32 erfolgt nach dem gleichen Prinzip mit den gleichen Bauelementen. Es wird daher im folgenden nur die Steuerung der Leistungsstufe 31 erläutert. Die Steuerung an sich hat damit Gültigkeit auch für Zündkreise mit nur einer einzigen Leistungsstufe oder bei Zündkreisen mit entsprechend mehreren Leistungstufen.

Der Steuereingang G der Leistungsstufe 31 ist über einen elektrisch steuerbaren Schalter 5 mit einer Stromquelle I_{gate} verbunden. Soll das Zündelement 1 gezündet werden, so wird durch die nicht eingezeichnete Steuereinheit der Schalter 5 geschlossen. Damit wird die Leistungsstufe 31 leitend geschaltet und es kann ein Stromfluß aus der Energiequelle 2 über die Leistungsstufe 31 zu dem Zündelement erfolgen.

Der Strom I im Stromkreis/Zündkreis 31,1,32 wird mit Hilfe des Meßwiderstandes RM gemessen. Dazu greift eine Stromquellensteuerung 7 die Spannung am Meßwiderstand RM ab und ermittelt aus dieser Spannung und dem bekannten Widerstandswert des Meßwiderstandes RM den Stromfluß im Stromkreis. Die Stromquellensteuerung 7 wirkt derart steuernd auf die steuerbare Stromquelle I_{gate} ein, daß bei einem erhöhten Stromfluß im Stromkreis nur ein maximaler Strom von der Stromquelle I_{Ga-} ₜₑ geliefert wird. Leistungssufe 31, Stromquelle I_{gate} und Stromquellensteuerung 7 bilden dabei eine Strombegrenzerschaltung für den Strom I im Zündkreis 31,1,32. Die Mittel zur Strombegrenzung im Zündkreis können aber auch anders ausgebildet sein.

Am Anschluß A2 wird die Spannung U₃₁ abgegriffen, wobei die Spannung U₃₁ in etwa dem Spannungsabfall U_{DS} an der Leistungsstufe 31 entspricht, da der Spannungsabfall am niederohmigen Meßwiderstand RM vernachlässigt werden kann. Liegt vor dem Zünden ein Leck am Zündkreis vor, insbesondere z.B. an A3 nach Masse, so ändern sich die Widerstandsverhältnisse im Zündkreis, wodurch sich der Spannungsabfall U₃₁ an der Leistungsstufe 31 signifikant erhöht. Die Spannung U₃₁ beträgt dann etwa U_{bat} gegenüber U_{bat}/2 bei einem Zündkreis ohne Leck nach Masse. Die Spannung U₃₁ wird in einer Vergleichseinrichtung 6 mit einem Grenzwert G1 verglichen. Die Vergleichseinrichtung 6 enthält in üblicher Weise einen Differenzverstärker und ist zum Vergleichen zweier elektrischer Größen ausgebildet hier zum Vergleichen der Spannung U₃₁ mit einem Grenzwert G1 Sie liefert an ihrem Ausgang abhängig vom Ergebnis des Vergleichs einen HIGH- oder einen LOW-Pegel. Überschreitet die Spannung U₃₁ den Grenzwert G1, so wird ein HIGH-Signal an eine Steuerschaltung 41 geliefert. Die Steuerschaltung 4 ist vorzugsweise als Kippschaltung (Latch) 41 ausgebildet mit einem Setz-Eingang S und mit einem Rücksetz-Eingang R. Der Rücksetz-Eingang R ist mit einem Taktgeber 411 verbunden der ein Taktsignal liefert, dessen LOW-Pegel eine konstante Zeitdauer von tₒᵤₜ aufweisen. Der Ausgang der Kippschaltung 41 ist mit dem Steuereingang des steuerbaren Schalters 5 verbunden.

Wird aufgrund eines Lecks oder eines sonstigen Kurzschlusses im Zündkreis eine erhöhte Spannung U₃₁ an der Leistungsstufe 31 und damit ein erhöhter Leistungsverlust an dieser Leistungsstufe 31 festgestellt, was sich insbesondere in einer Spannung U₃₁ größer dem Grenzwert G1 äußert, so wird die Kippschaltung 41 mit einem HIGH-Signal am Ausgang der Vergleichseinrichtung 6 gesetzt und liefert ein LOW-Signal an ihrem Ausgang, das den gewöhnlich bereits durch die nicht eingezeichnete Steuereinheit geschlossenen Schalter 5 öffnet. Damit ist die Stromversorgung für den Steuereingang G der Leistungsstufe 31 unterbrochen, sodaß auch die Leistungsstufe 31 selbst sperrend geschaltet ist und den Stromfluß I im Zündkreis unterbricht. Mit dem nächsten HIGH-Pegel im symbolisch eingezeichneten Taktsignal des Taktgenerators 411 wird die Kippschaltung 41 zurückgesetzt. Sie liefert einen HIGH-Pegel an ihrem Ausgang und schließt wiederum den Schalter 5, sodaß für kurze Zeit erneut ein Stromfluß I im Zündkreis erfolgt.

Die Zeitdauer tₒᵤₜ bis zum Rücksetzen der Kippschaltung, d.h. bis zum erneuten Schließen des Schalters 5, ist vorzugsweise konstant im Taktsignal des Taktgebers 411 und beträgt etwa 0,5 ms. Diese Zeitspanne kann jedoch auch in gewissen Grenzen variabel festgelegt sein wie im vorangegangenen Beispiel, da nicht die Zeitspanne zwischen Stromflußunterbrechung und Stromflußaufnahme eindeutig festgelegt ist sondern die Zeitspanne durch die Ausbildung des Taktsignals mittelbar festgelegt ist. Auch die mittelbare Festlegung der Zeitspanne ist vom Schutz mitumfaßt. In jedem Fall muß die Zeitspanne in dem Sinne festgelegt sein, sodaß ein erneutes Zuschalten des Stroms I im Zündkreis in absehbarer Zeit nach einem Unterbrechen des Stromflusses I erfolgt. Bei Verwendung eines Taktgenerators 411 nach dem Ausführungsbeispiel in der Figur ist das Taktsignal vorzugsweise derart auszubilden, daß die HIGH-Pegel regelmäßig eine kürzere Laufzeit aufweisen als die LOW-Pegel. Ein Zuschalten der Leistungsstufe 31 kann aber auch abhängig von der Temperatur der Leistungsstufe 31 abhängen: Erst wenn die gemessene Temperatur der Leistungsstufe 31 einen zugeordneten Schwellwert unterschreitet, wird die Leistungsstufe 31 wieder leitend geschaltet.

Werden wie in der einzigen Figur zwei Leistungsstufen 31 und 32 in Serie zum Zündelement 1 geschaltet, so kann durch die vorbeschriebene erfindungsgemäße Steuerung einer jeden Leistungsstufe 31 und 32 für sich ein verlustarmes Zünden sowohl bei einem Leckstrom nach Masse als auch bei einem Leckstrom nach U_{bat} erreicht werden.

Die Bauteile gemäß der Figur sind allemsamt in einem gemeinsamen Gehäuse angeordnet und bilden ein sogenanntes Steuergerät. Dabei ist lediglich das Zündelement 1 über Anschlüsse A2 und A3 an das Steuergerät angeschlossen wie auch die Energiequelle 2, wobei entgegen der Zeichnung der Zündkondensator C vorzugsweise auch im Steuergerät angeordnet ist.

## Patentansprüche

1. Steuervorrichtung für ein Insassenschutzmittel, mit einem Zündkreis, der aufweist:
- ein Zündelement (1) für das Insassenschutzmittel,
- ein elektrisch steuerbares Schaltmittel (3) zum Zuführen von Energie aus einer Energiequelle (2) zu dem Zündelement (1),
- Mittel zur Strombegrenzung für den Strom im Zündkreis, wobei eine Vergleichseinrichtung (6) vorgesehen ist zum Vergleichen einer an dem Schaltmittel (3) abfallenden Spannung (U₃₁, U₃₂) mit einem Grenzwert (G1,G2), und wobei eine Steuerschaltung (4) vorgesehen ist zum Unterbrechen der Energiezufuhr, wenn die Spannung (U₃₁, U₃₂) den Grenzwert (G1,G2) überschreitet, **dadurch gekennzeichnet, daß** die Steuerschaltung (4) zum erneuten Zuführen von Energie nach einer von einer Temperatur des Schaltmittels (3) abhängigen Zeitspanne (tₒᵤₜ) nach dem Abschalten ausgebildet ist.

2. Steuervorrichtung nach Anspruch 1, **dadurch gekennzeichnet, daß** die Steuerschaltung (4) ausgebildet ist zum erneuten Zuführen von Energie nach dem Ablauf einer Zeitspanne (tₒᵤₜ) nach dem Abschalten.

3. Steuervorrichtung nach Anspruch 1 oder Anspruch 2, **dadurch gekennzeichnet, daß** die Steuerschaltung (4) eine Kippstufe (41) umfaßt, deren Eingänge mit dem Ausgang der Vergleichseinrichtung (6) und mit einem Taktgeber (411) verbunden sind, und deren Ausgang auf den Steuereingang (G) des Schaltmittels (3) wirkt.

4. Steuervorrichtung nach einem der vorhergehenden Ansprüche, **dadurch gekennzeichnet, daß** der Steuereingang (G) des Schaltmittels (3) mit einer Stromquelle (I_{Gate}) verbunden ist.

5. Steuervorrichtung nach Anspruch 4, **dadurch gekennzeichnet, daß** die Stromquelle (I_{Gate}) durch den Strom im Zündkreis gesteuert wird.

6. Steuervorrichtung nach Anspruch 4 oder Anspruch 5, **dadurch gekennzeichnet, daß** zwischen dem Steuereingang (G) des Schaltmittels (3) und der Stromquelle (I_{Gate}) ein elektrisch steuerbarer Schalter (5) angeordnet ist, dessen Steuereingang mit dem Ausgang der Steuerschaltung (4) verbunden ist.

7. Steuervorrichtung nach einem der vorhergehenden Ansprüche, **dadurch gekennzeichnet, daß** das Schaitmittel (3) eine steuerbare Leistungsstufe (31,32) enthält.

8. Steuervorrichtung nach einem der Ansprüche 3 bis 7,
**dadurch gekennzeichnet, daß** die Steuerschaltung (4) zum erneuten Zuführen von Energie nach einer festgelegten Zeitspanne (tₒᵤₜ) nach dem Abschalten ausgebildet ist.

9. Verfahren zum Steuern eines Insassenschutzmittels,
- bei dem einem dem Insassenschutzmittel zugeordneten Zündelement (1) über ein elektrisch steuerbares Schaltmittel (3) Energie zum Zünden zugeführt wird, und
- bei dem eine an dem Schaltmittel (3) abfallende Spannung (U₃₁, U₃₂) aufgenommen wird,
- bei dem die Energiezufuhr unterbrochen wird, wenn die Spannung (U₃₁, U₃₂) einen Grenzwert (G1,G2) übersteigt,
**dadurch gekennzeichnet, daß**
- nach einer von einer Temperatur des Schaltmittels (3) abhängigen Zeitspanne (tₒᵤₜ) dem Zündelement (1) wieder Energie zugeführt wird.

## Claims

1. Control arrangement for an occupant protection device, with a firing circuit having:
- a squib (1) for the occupant protection device,
- an electrically controllable switching device (3) for feeding energy from a power source (2) to the squib (1),
- means of current limiting for the current in the firing circuit, a comparator device (6) being provided for comparing a voltage (U₃₁, U₃₂) dropped across the switching device (3) with a limit value (G1,G2), and a control circuit (4) being provided for interrupting the energy supply if the voltage (U₃₁, U₃₂) exceeds the limit value (G1,G2), **characterised in that** the control circuit (4) is designed to resume supplying energy after a time interval (tₒᵤₜ) following shutdown as a function of the temperature of the switching device (3).

2. Control arrangement according to Claim 1, **characterised in that** the control circuit (4) is designed to resume supplying energy after a time interval (tₒᵤₜ) has elapsed after shutdown.

3. Control arrangement according to Claim 1 or Claim 2,
**characterised in that** the control circuit (4) incorporates a latch (41) whose inputs are connected to the output of the comparator device (6) and to a clock generator (411), and whose output affects the control input (G) of the switching device (3).

4. Control arrangement according to one of the preceding claims,
**characterised in that** the control input (G) of the switching device (3) is connected to a current source (I_{Gate}).

5. Control arrangement according to Claim 4, **characterised in that** the current source (I_{Gate}) is controlled by the current in the firing circuit.

6. Control arrangement according to Claim 4 or Claim 5,
**characterised in that** there is disposed between the control input (G) of the switching device (3) and the current source (I_{Gate}) an electrically controllable switch (5) whose control input is connected to the output of the control circuit (4).

7. Control arrangement according to one of the preceding claims,
**characterised in that** the switching device (3) contains a controllable power stage (31,32).

8. Control arrangement according to one of Claims 3 to 7,
**characterised in that** the control circuit (4) is designed to resume supplying energy after a time interval (tₒᵤₜ) following shutdown.

9. Method for controlling an occupant protection device,
- wherein triggering energy is supplied to a squib (1) assigned to the occupant protection device via an electrically controllable switching device (3), and
- wherein a voltage (U₃₁, U₃₂) dropped across the switching means (3) is recorded,
- wherein the energy supply is interrupted if the voltage (U₃₁, U₃₂) exceeds a limit value (G1,G2),
**characterised in that** energy is again supplied to the squib (1) after a time interval (tₒᵤₜ) dependent on the temperature of the switching device (3).

## Revendications

1. Dispositif de commande pour un moyen de protection de passagers comportant un circuit d'allumage, lequel présente :
- un élément d'allumage (1) destiné au moyen de protection de passagers,
- un moyen de commutation (3) commandable électriquement pour amener de l'énergie provenant d'une source d'énergie (2) à un élément d'allumage (1),
- des moyens de limitation de courant permettant de limiter le courant circulant dans le circuit d'allumage,
un dispositif comparateur (6) étant prévu pour comparer une tension (U₃₁, U₃₂) chutant au niveau du moyen de commutation (3) à une valeur limite (G1,G2), et un circuit de commande (4) étant prévu pour interrompre l'alimentation en énergie lorsque la tension (U₃₁, U₃₂) dépasse la valeur limite (G1, G2), **caractérisé en ce que** le circuit de commande (4) est conçu pour apporter de nouveau de l'énergie après une durée (tₒᵤₜ) qui suit la mise hors circuit, ladite durée dépendant d'une température donnée du moyen de commutation (3).

2. Dispositif de commande selon la revendication 1, **caractérisé en ce que** le circuit de commande (4) est conçu pour apporter de nouveau de l'énergie après écoulement d'une durée (tₒᵤₜ) qui suit la mise hors circuit.

3. Dispositif de commande selon la revendication 1 ou la revendication 2, **caractérisé en ce que** le circuit de commande (4) comprend un étage de relaxation (41) dont les entrées sont reliées à la sortie du dispositif comparateur (6) et à un générateur de rythme (411), et dont la sortie agit sur l'entrée de commande (G) du moyen de commutation (3).

4. Dispositif de commande selon l'une des revendications précédentes, **caractérisé en ce que** l'entrée de commande (G) du moyen de commutation (3) est reliée à une source de courant (I_{Gate}).

5. Dispositif de commande selon la revendication 4, **caractérisé en ce que** la source de courant (I_{Gate}) est commandée par le courant circulant dans le circuit d'allumage.

6. Dispositif de commande selon la revendication 4 ou la revendication 5, **caractérisé en ce que**, entre l'entrée de commande (G) du moyen de commutation (3) et la source de courant (I_{Gate}) est disposé un commutateur (5) commandable électriquement, dont l'entrée de commande est reliée à la sortie du circuit de commande (4).

7. Dispositif de commande selon l'une des revendications précédentes, **caractérisé en ce que** le moyen de commutation (3) comprend un étage de puissance commandable (31, 32).

8. Dispositif de commande selon l'une des revendications 3 à 7, **caractérisé en ce que** le circuit de commande (4) est conçu pour apporter de nouveau de l'énergie après écoulement d'une durée (tₒᵤₜ) déterminée qui suit la mise hors circuit.

9. Procédé permettant de commander un moyen de protection de passagers,
- dans lequel, par l'intermédiaire d'un moyen de commutation (3) commandable électriquement, de l'énergie pour l'allumage est amenée à un élément d'allumage (1) attribué au moyen de protection de passagers, et
- dans lequel est captée une tension (U₃₁, U₃₂) qui chute au niveau du moyen de commutation (3),
- dans lequel l'alimentation en énergie est interrompue lorsque la tension (U₃₁, U₃₂) dépasse une valeur limite (G1, G2), **caractérisé en ce que**, après une durée (tₒᵤₜ) dépendant d'une température donnée du moyen de commutation (3), de l'énergie est de nouveau amenée à l'élément d'allumage (1).
